# EUROPEAN PATENT SPECIFICATION

(11) **EP 1 068 460 B1**
(45) Date of publication and mention of the grant of the patent: **18.09.2002**
(21) Application number: 98957011.4
(22) Date of filing: 02.12.1998
(51) Int. Cl.: F16F 5/00, F16F 9/00, F16F 9/30, A62C 3/00, A41D 13/00, A43B 7/32, B60K 15/00, B60R 21/00, A62B 35/00, B64D 25/00, D06F 37/00

(54) **IMPROVED ELASTOMERIC IMPACT ABSORBER WITH VISCOUS DAMPING**
VERBESSERTER, ELASTOMERER AUFPRALLDÄMPFER MIT VISKOSER DÄMPFUNG
AMORTISSEUR ELASTOMERE PERFECTIONNE A AMORTISSEMENT VISQUEUX

(30) Priority: 20.03.1998 GB 9805889; 10.06.1998 GB 9812378
(43) Date of publication of application: 17.01.2001
(73) Proprietor: Courtney, William Alexander, Altrincham, Cheshire WA15 7TQ (GB)
(72) Inventor: COURTNEY, William, Alexander, Cheshire WA15 7TQ (GB)
(86) International application number: GB9803594
(87) International publication number: WO99049236

(56) References cited:
- WO-A-92/01585
- WO-A-97/16084
- WO-A-97/25551
- DE-A- 2 701 181
- FR-A- 2 738 998
- US-A- 4 566 565
- US-A- 4 647 258
- US-A- 4 751 757
- US-A- 5 190 248
- US-A- 5 564 202

## Description

### Technical Field

This invention relates to improvements in devices used as energy absorbers, to mitigate the undesirable effects of sudden blows or vibrations on bodies or machines.
According to the present invention, there is provided an impact or vibration absorbing device, consisting of a deformable container or flexible package, filled with a mixture of a liquid, grease or jelly fluid and two or more resilient capsules, free to move relative to each other, with the device including one or more permeable barriers, with the holes in the barriers being too small to allow the passage of the capsules, characterised by the provision of viscous damping when some of the fluid is forced through small holes in the barrier (s) during violent impacts.

### Background Art

Fluid filled impact absorbing devices have been described in a previous patent application, PCT/GB9603243 (Courtney) filed by the present inventor. The earlier patent application relates to impact absorbers comprising flexible walled packages filled with a mixture of a viscous liquid, jelly or grease and a plurality of resilient gas filled capsules, with the liquid component of the mixture filling all of the void space between the gas filled capsules. The liquid fraction was an essential part of the earlier invention but its inclusion created the following potential design problems:
1. The liquid provided some viscous damping but the viscous damping per unit mass of liquid was low compared with conventional dashpot type dampers, where the liquid is driven through a permeable barrier, by a pressure difference across the barrier.
2. The liquid component of the invention makes it heavier than expanded elastomeric foam impact absorbers of the same volume.
3. For some versions of the earlier invention it is possible that during an impact, all of the material inside the package will flow to the sides of the impact zone, allowing the front and back, inner surfaces of the package walls to come into direct contact. I.e. the device bottoms out and completely loses its cushioning ability.
4. The walls of the flexible package could catastrophically unzip during a violent impact, with the enclosed fluid being released into the local environment, causing contamination and/or creating slippery surface hazards.

The current invention improves on the invention described in PCT/GB9603243 (Courtney) by using permeable barriers to make more efficient use of the energy absorbing properties of the viscous liquid, by incorporating internal elastomeric solid or foam layers to solve bottoming out problems and by improving the packaging design, in order to solve the problem of catastrophic unzipping.

Three inventions revealed by other inventors in the prior art have certain design characteristics in common with the present invention but none of them include all of the necessary features which enable the present invention to offer superior impact absorbing performance. Wicke in patent application US 4 566 565 describes a self pressurised damper which includes a single bubble or bladder filled with gas and a sliding fit piston, inside a close fitting, surrounding tube. The piston is permeable and provides damping when hydraulic fluid is forced to pass through its pores during reciprocating motion of the piston inside the tube. In contrast, a first feature of the present invention is that it includes more than one gas filled capsule. A performance benefit of having a plurality of elastomeric capsules for the present invention is that it increases the total surface area of the elastomeric material and provides a higher degree of damping. Other differences are, that the suspension unit versions of the present invention do not require the presence of a close fitting tube to provide piston guidance or a sliding fit seal for the piston shaft to move in and out of the damper unit. This significantly reduces the manufacturing costs of suspension units made according to the present invention, compared with those made in accordance with the Wicke invention.

Carlos in patent application US 4 751 757 describes a water bed which includes porous partitions suspended from rafts of gas cells which float on top of the water. The partitions provide damping when water is forced to flow through them, as a person lying on top of the bed moves. The present invention performs differently from that of Carlos because the elastomeric capsules are not bonded together in sheet form, to float on top of the liquid, but are free to move relative to each other, throughout the volume of the matrix liquid, during an impact.

Massarsch in patent application US 4 647 258 A describes a vibration damping or isolation diaphragm which, in one version, includes gas filled cells surrounded by liquid. The Massarsch invention does not however offer the high degree of additional viscous damping provided by matrix fluid being driven through permeable barriers external to the elastomeric capsules. Nor does it offer any provision for the gas cells to move relative to each other when an external deforming force is applied.

### Brief description of the drawings

**Figure 1** depicts a typical dynamic compressive stress-strain curve for an impact absorber, according to the earlier invention.

**Figure 2** depicts the modified dynamic compressive stress-strain curve for the same impact absorber, with a permeable barrier added according to the present invention.

**Figure 3** depicts an improved version of the invention which has the ability to heal itself after a violent impact.

**Figure 4** depicts a plan cross section of a car bumper constructed according to the invention.

**Fig 5** depicts the same bumper during an impact.

**Figure 6** depicts an impact absorber which uses the viscous damping mechanism described for the car bumper but employs two sub-chambers in sequence along the line of action of the impacting force.

**Figure 7** depicts a cross section of a rigid beam which includes an impact absorber according to the invention.

**Figures 8** to **12** show five different designs of vibration damping devices or mounts according to the invention.

**Figure 13** depicts an example of the device having a pleated protective cover, with the inner package being an impact absorbing cushion taking the shape of a slightly flattened cylinder, with elliptical cross section.

**Figure 14** depicts an alternative design to that illustrated in Figure 13, which overcomes the trapped pleats problem.

**Figure 15** depicts an example of the device with the outer cover being constructed from an elastomeric polymer and having a corrugated cross section.

**Figure 16** depicts an embodiment of a composite version the invention which includes an elastomeric base layer or pallet inside the package.

**Figures 17** and **18** depict the composite version of the invention during successive stages of a violent impact.

**Figure 19** depicts a composite version of the invention which can offer improved protection to the underlying surface.

**Figure 20** depicts a variation of the composite version of the invention, which allows articulation of the impact absorber, even if the solid layers are made from rigid impact absorbing materials.

### Disclosure of the invention

The inventive step described in this patent application is a method for increasing the viscous damping offered by known, fluid filled impact absorbers, as described in patent application PCT/GB9603243, filed by the present inventor, by forcing some of the liquid through one or more permeable barriers during the impact absorption process. The patent application will also reveal a method of locally retaining the liquid which could escape through the package walls during a violent impact. A third feature of the improved version of the invention is a method for exploiting the pressure equalisation benefits of fluid filled impact absorbers, without incurring the problem of the front and back, inner surfaces of the package walls coming into direct contact during an impact. An additional benefit of the third innovative feature is that the mean density of the improved device can be reduced, compared with the earlier invention, because the fractional volume of liquid required for efficient functioning of the device can be decreased.

The resilient capsules for the present invention may be solid elastomers or include a trapped volume of gas. This is an improvement on patent application PCT/GB9603243, which was restricted to capsules which enclosed a volume of gas. In what follows, the incompressible fraction of the fluid will be referred to as a liquid, but it is to be understood that, in general, the liquid could be replaced by a grease or jelly. The earlier patent application was also restricted to impact absorbing devices which were characterised by having at least one easily deformable face. The present patent application is not restricted to this type of impact absorber. It is extended to include impact and vibration absorbers which are characterised by rigid loading surfaces, for example, piston and dashpot type impact absorbers. A common feature of all of the versions of the current invention to be revealed is that they include at the very least, two elastomeric capsules, with typical examples including many elastomeric capsules, which are free to move relative to each other, to rearrange their relative positions, during an impact.

The earlier invention offered the possibility of providing viscous damping in at least two ways:
1. The rearrangement of the liquid when closed gas capsules contracted in size during an impact provided bulk viscosity damping.
2. The shearing of liquid layers which occurred when liquid moved in or out of the open ended gas capsules, for some versions of the device, caused a shear viscous damping effect.

The present invention is a novel improvement on the earlier invention described in PCT/GB9603243 because it generates additional viscous damping by driving the liquid through one or more permeable barriers which are an essential part of the present device. The permeable barriers can take the form of partitions inside the device which separate the fluid contents into two or more sub-chambers, which can exist at different pressures during the impact. Alternatively, the barrier can be part of the packaging system. Both types of barrier will be described below. According to the present invention the design engineer has a choice of two types of permeable barrier;-Step function or continuous function. Step function barriers do not leak during low energy impacts. With continuous function barriers leakage through the barrier can occur at all levels of impact but the volume of leakage and the magnitude of viscous damping forces increases as the degree of violence of the impact increases.

The barrier(s) may be made permeable using several alternative methods. The following methods are by way of example only and are not intended to limit the scope of the invention:
1. Barriers may be made from a strong woven material with one surface of the fabric being coated with a sealing compound which breaks down and allows leakage through the weave at the desired pressure difference across the barrier.
2. The coated layer in the first type of barrier may be dispensed with and the woven fabric chosen such that the tightness of the weave will not allow significant leakage through the barrier, during low energy impacts.
3. Barriers may take the form of sheets of metal, wood or solid polymer material with a plurality of small holes made in the faces of their planes. Plugs or other means of sealing holes at low compressive stress differences may be added to these types of barrier, to convert them into step function barriers.
4. The porous zones may be introduced as puncture holes at the points where parts of the package are sewn together. A sealant may be added on top of the lines of sewing to create a step function which does not leak at low compressive stresses.
5. The barrier may take the form of a plurality of permeable sheets in series, optionally having different step function breakdown stresses, with each successive sheet layer allowing leakage to the next sheet layer at a higher compressive stress difference. If the sheet materials are slightly elastic then the liquid can pass trough the first sheet layer of the barrier and become trapped there until the pressure gradient is sufficiently high to force it through the second sheet layer and so forth.

The benefits of adding permeable barriers to the earlier invention can readily be understood by reference to the dynamic compressive stress-strain curve for a typical sample of the device.

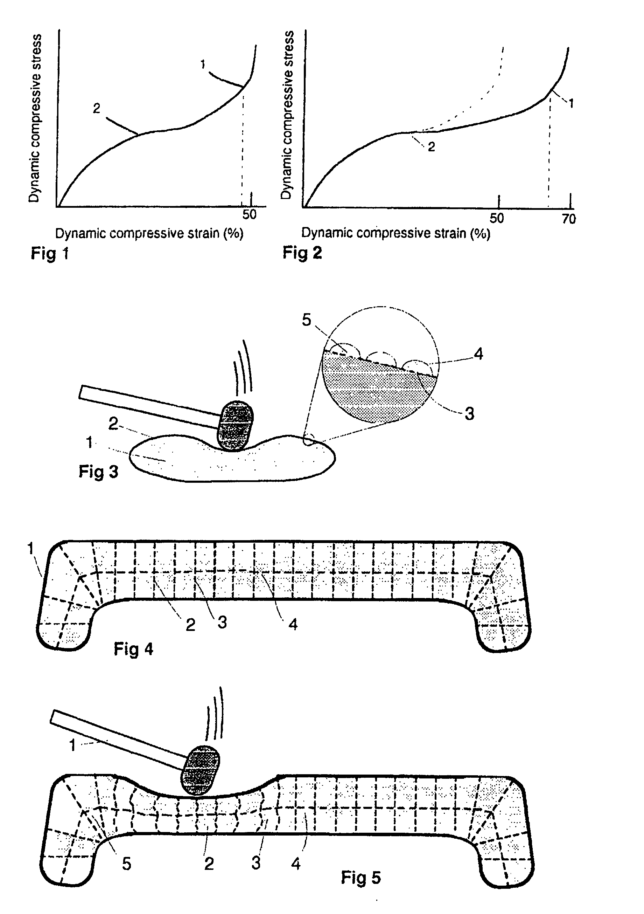

**Figure 1** depicts a typical dynamic compressive stress-strain curve for an impact absorber, according to the earlier invention.
Point **1** on the curve is the maximum acceptable compressive stress for a hypothetical application of the pad. It is assumed that if this stress is exceeded, then an unacceptable degree of damage will be done to the body being protected.
The work done in absorbing impact energy per unit volume of the shock absorbing device, before the maximum acceptable compressive stress is reached, is given by the area under the graph up to point **1**. It is a desirable characteristic of the device that this area should be as large as possible.

Point **2** on the curve is the compressive stress level at which the proposed permeable barrier, when added to the improved device, starts to leak significantly.

**Figure 2** depicts the modified dynamic compressive stress-strain curve for the same impact absorber, with a barrier added according to the present invention. In this example, the barrier could be a woven outer packaging, with the material being coated, so that it creates a step function barrier that only starts to leak at fairly high compressive stresses.
Points **1** and **2** in **Figure 2** have the same meaning as in **Figure 1**.
Work is done against viscous forces as the liquid is driven through the permeable barrier and the point of application of the external force moves forward. The work done per unit volume of impact absorber, before the compressive stress reaches an unacceptably high level can be calculated from the area under the graph up to point **1**, as for Figure 1. The effect of adding the permeable barrier is to increase the amount of work that can be done to absorb the impact energy, before an unacceptable level of compressive stress is reached.

In order to prevent contamination of the local environment, from the permeable packaging version of the device, following a violent impact, an elastic outer cover or bag can be added. The improved version of the device traps any leaked material between the outer cover and the permeable membrane barrier. Examples of suitable barriers will be described later in this application.

The invention may be improved by inserting one or more thick sheets of elastomeric solid or foam material inside the package, with the plains of the sheets being approximately at right angles to the direction of impact of the external, impacting body. The hydraulic pressure equalisation characteristics of the invention enable the whole of the volume of the elastomeric sheets to be compressed during the impact. These sheets are sufficiently thick that they can compress measurably during the impact, absorbing a significant fraction of the impact energy.

### Further embodiments of the invention

The version of the new invention, with the inclusion of permeable walled packaging, as explained with reference to Figure 2 above can be used in marketable products but it suffers from the disadvantage that the device is permanently damaged after one severe impact.
**Figure 3** depicts an improved version of the invention which has the ability to heal itself after a violent impact. In **Figure 3** the impact absorbing material, **1** is enclosed in a package, **2**. The magnified view which is shown on the right of the diagram depicts the structure of the package wall in more detail. Item **3** is part of the inner layer of the wall and is a woven fabric which becomes permeable when a sufficiently high pressure difference exists across the layer. Item **4** is part of an elastic, impermeable outer membrane layer which is strongly bonded to the inner layer at
intervals, in the manner of quilting. During violent impacts, liquid is driven through the barrier, **3**, stretching the elastic outer membrane layer, **4** and creating liquid filled bubbles such as **5**. The bubbles are created in a short period of time during the impact, typically about 0.1 seconds, The small pressure difference caused by the local stretching of the outer layer can still drive the liquid back into the main body of the device, but the healing process takes a relatively long time. Depending on the tightness of the weave of **1**, the elasticity of layer **4** and the dynamic viscosity of the liquid, recovery can take place in a matter of minutes or days.

One of the design features of impact absorbing pads made according to the earlier invention was that hydraulic fluid pressure transmitted the compressive stress equally in all directions. This meant that if the area of the impact zone was a fraction of the total front surface area of the pad, say for example 70%, then the volume of impact absorbing material under the remaining 30% of the front surface, outside the impact zone, could still play an active role in absorbing the energy of the impact. This highly efficient use of the total impact absorber volume cannot be maintained indefinitely. If the front surface area of the pad is too large, then its contents can flow to the sides of the impact zone, allowing the inner surfaces of the front and rear faces of the pad under the impact zone to make hard contact. That is, the pad will bottom out. According to the present invention, the inclusion of permeable barriers, inside the pad, can significantly reduce this problem.
**Figure 4** depicts a plan cross section of a car bumper, which in this case is essentially a long, slender pad shaped version of the device. The outer surface of the bumper, **1** is the packaging material for the pad. For simplicity of explanation it will be assumed that the packing material is a totally impermeable single layer. The vertical dashed lines such as **2** and **3** represent permeable barriers which partition the fluid contents into a number of connected sub-chambers. The permeable barriers are made from a strong, flexible material which does not stretch significantly during an impact. The barriers could, for example, be permeable sheets securely anchored to the inner walls, so that they do not move along the length of the bumper, away from an impact zone. Optional, strong but flexible cross ties such as **4** may link the permeable barriers. The cross ties limit the amount of lateral bulging of the permeable barriers during impact. Alternatives to anchoring the permeable barriers to the inner walls of the bumper are to pack the elastomeric capsules into a number of adjacent bags made from strong, permeable material or to pack the elastomeric material into a long permeable, stocking like tube, with the tube being twisted through at least one hundred and eighty degrees, at intervals along its length, to create a plurality of separate, elastomeric capsule filled compartments.

**Figure 5** depicts the bumper during an impact, represented symbolically by the swinging hammer, **1**. The sub-chambers directly under or near the impact zone such as **2** and **3** partially collapse and are compressed in the approximate direction of the impact. The permeable barriers enclosing the collapsed sub-chambers are compressed in the line of their planes and are free to move, so that there is no pressure gradient across their faces.
Sub-chambers at a distance from the impact zone, such as items **4** and **5** in **Figure 5** are enclosed by permeable barriers which experience a resultant stress at right angles to their planes. For these regions of the bumper a pressure gradient across the permeable membranes can exist.
The pressure gradients across successive permeable membranes, moving away from the impact zone gradually reduce the excess pressure in successive sub-chambers, until after a number of sub-chambers have been traversed the excess pressure is negligible. The number of sub-chambers involved in this step reduction in excess pressure depends on the dimensions of the holes in the permeable barrier and the viscosity of the liquid.
A practical effect of partitioning the impact absorbing bumper by the inclusion of permeable membranes is that, during an impact, the device creates an active volume around the impact zone. This volume participates in the impact absorbing process by providing elastic and viscous damping energy absorption but the active volume is self limiting. The device can be designed to eliminate the problem of local thinning to zero thickness and consequent bottoming out. An alternative method of solving the bottoming out problem, which is less effective in the exploitation of viscous damping, but reduces the unit weight of the device will be described later.

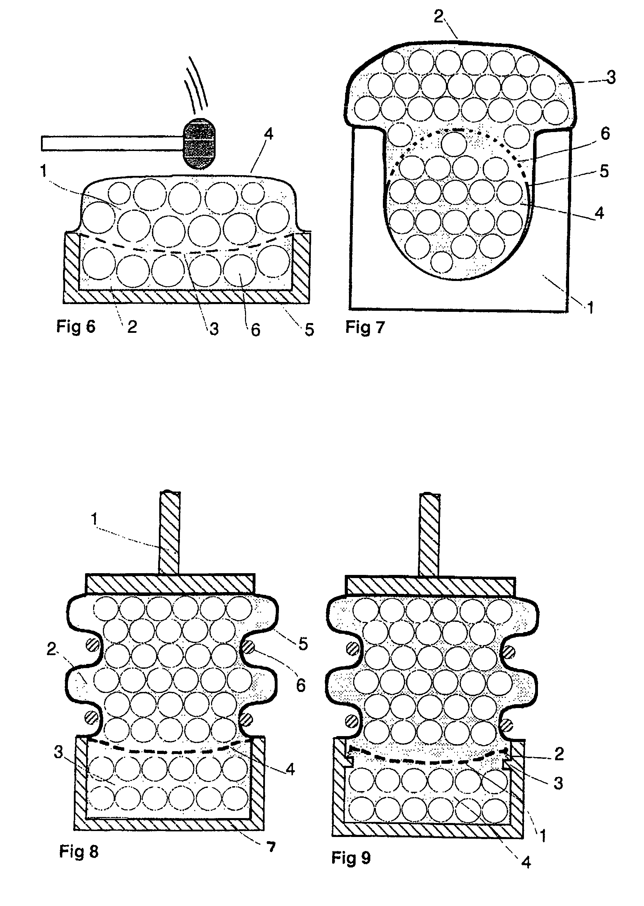

**Figure 6** depicts an impact absorber which uses the internal, viscous damping barrier principle described for the car bumper above, but employs two sub-chambers, **1** and **2** in sequence along the line of action of the impacting force.
The two sub chambers are separated by a stiff permeable barrier, **3** which does not stretch significantly under impact. For example, **3** could be a steel plate with a plurality of small holes drilled through it. The leading sub-chamber, **1** has a flexible face, **4** which deforms to the shape of the front of the impacting body. The second sub-chamber, **2** is enclosed at its sides and at its base by a rigid walled case **5**, so that it does not deform directly under impact. The contents of sub-chamber **2** are only compressed indirectly by the passage of liquid through the permeable barrier during the impact. When the external deforming force is reduced the resilient capsules such as **6** in sub-chamber **2**, expand and recover, driving the excess liquid back through the barrier into sub-chamber **1**. The device may take any convenient shape at right angles to that shown in the diagram. For example, Figure **6** could be a vertical cross section through a vertical cylinder or a long horizontal beam. The rigid walled case, **5** may be designed to buckle and absorb some impact energy under exceptionally violent impact conditions. The case may be hollow and filled with elastomeric foam or an elastomeric capsule and liquid mixture.

Typical examples of load bearing beams which require side cushioning include the A and B pillars which help to support the roofs of motor vehicles. **Figure 7** depicts a cross section of a rigid beam, **1** at right angles to its length. The device has a flexible front face **2**, a front sub-chamber, **3** and a rear sub-chamber, **4**. Item **5** is a second hollow beam, also shown in cross section, which reinforces the first hollow beam, **1**. Hollow beam **5** also doubles as the permeable barrier because a plurality of small holes, such as **6** are drilled through its front side as shown in the diagram. In addition to making very effective use of the available space, the elastomeric fluid inside the secondary beam **5** in this design, can also help to reinforce the beam, **5**. In the event of a severe impact on the beam at right angles to its length which causes **5** to compress telescopically and buckle in folds, the compressible fluid inside the beam would help to even out the forces and encourage many small energy absorbing folds to be created instead of a small number of large ones.

**Figure 8** is a vibration damping device or mount which is essentially the same in construction as the impact absorber illustrated in Figure 6. In **Figure 8** a piston, **1** transmits the force of the vibration to the front sub-chamber **2** and then indirectly to the rear sub-chamber, **3** through the permeable barrier, **4**. The side walls of the front sub-chamber take the form of a collapsible bellows, **5**. A helical coil spring, **6** is optionally added to increase the elastic stiffness of the mount. On the down stroke of the piston, the elastic cells in the front sub-chamber are compressed and some of the liquid is driven through the permeable barrier, compressing the elastic cells in sub-chamber **3**. The movement of the liquid through the permeable barrier provides viscous damping. The fraction of the impact energy which is elastically stored in the compressed cells and helical spring restores the device to its original length after the impact force has diminished. During recovery, the negative pressure change in the front sub-chamber **2** and the expansion of the cells in the rear sub-chamber **3** to their relaxed size, pumps liquid back out of rear sub-chamber and into the front sub-chamber.
The energy damping process heats up the liquid. This heat can be efficiently dissipated through the solid case **7** if it is constructed from thermally conducting material. If necessary, cooling fins can be added. (Fins not illustrated.)

A desirable feature of many vibration dampers is that they provide different degrees of damping on the down stroke and the return stroke. This feature can be incorporated into the present invention by allowing the permeable barrier to take the form of a rigid permeable sheet which can move up or down in the manner of a valve. **Figure 9** depicts a vibration damper which incorporates differential damping. The permeable barrier, **1** rests on a helical spring, **2** which in turn rests on an inner ledge, **3**. Permeable barrier **1** has a smaller diameter than the interior diameter of the second sub-chamber **4**, so when the helical spring, which supports **1** is relaxed, a gap exists between barrier **1** and the adjacent side wall. On the down stroke, the internal helical spring is compressed, closing the side gap and forcing the liquid to pass through the small holes in barrier **1**. On the up stroke the peripheral gap opens up and the liquid can take the easy return path through the gap.
If the peripheral gap is sufficiently large that there is a danger of gas capsules becoming trapped in the gap then the capsules may be retained by open mesh barriers, with the mesh size being smaller than the capsules in their compressed state but sufficiently large that the mesh only plays a secondary damping role, compared with the primary permeable barrier, 1.

The valve arrangement, as illustrated in **Figure 9** could be applied to the impact absorber illustrated in **Figure 6**. This type of impact absorber could be for example be used as a heel or sole cushion in an orthopaedic or sports shoe. The design would offer a high level of impact protection for sports such as basketball without sacrificing the desirable characteristic of a springy shoe which aids repeated high jumping and efficient running. For shoe designs the inventive features could take a different embodiment. For example, the helical spring could be replaced by a plurality of small elastomeric blocks or the permeable barrier could be shaped so that its perimeter also acted as a spring. The permeable barrier could have a two layer construction with the two layers having a small vertical separation. Large apertures in the two layers could be offset so that when compressed together, the effective size of the holes available for liquid transmission through the barrier was significantly reduced

The mounts illustrated in Figures 8 and 9 can be tuned at the manufacturing stage in a number of different ways, in order to optimise their performance.
The elastic stiffness of the mounts can be altered by changing the fractional volumes of gas filled capsules in the sub-chambers or by altering the stiffness of the optional external helical spring.
The damping can be altered by changing the viscosity of the liquid, the degree of permeability of the permeable barrier or by changing the compressible volumes on either side of the barrier. The compressible volume in the upper sub-chamber can take any value between zero, if it contains no resilient capsules and a maximum which is equal to the total compressible volume of the resilient capsules when they are close packed.

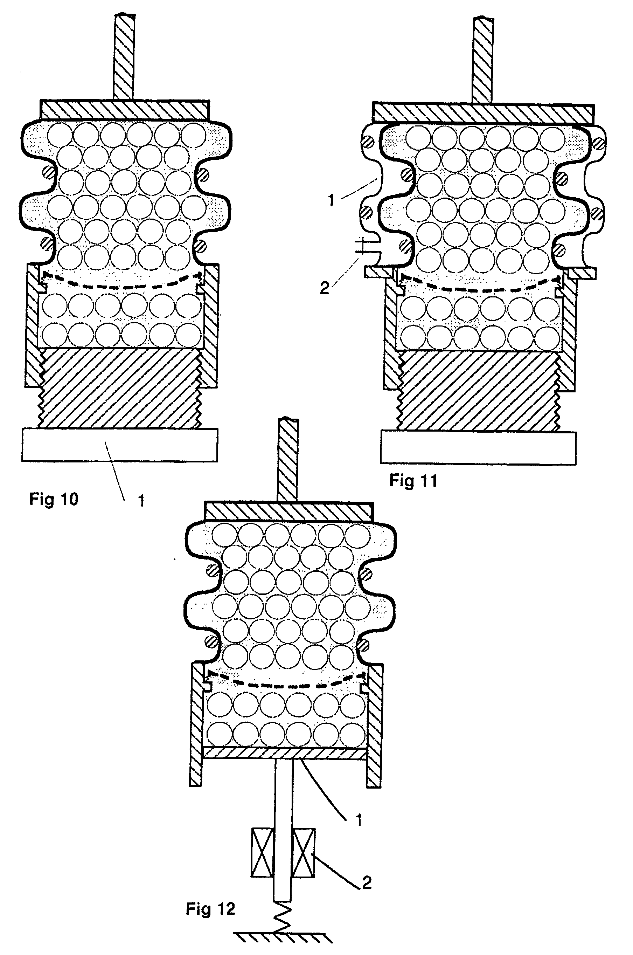

The damping characteristics of the mounts can also be tuned after they have been assembled, if the total volume in the lower sub-chamber can be altered. **Figure 10** depicts a design which permits on-site damping adjustment. The mount in this figure is similar to that illustrated in Figure 9, but it also incorporates a wide diameter bolt, **1** which acts as a piston. By tightening up the bolt the volume in the lower chamber is reduced.
**Figure 11** depicts a mount which permits on-site elastic stiffness adjustment. This is similar to the mount shown in **Figure 10** but has an external, air tight bellows, **1** which can be filled to a high pressure with air or a mixture of liquid and air through a valve **2**.

The vibration absorbing mounts described in this patent application can be converted into "smart" mounts by including electric circuits which can be employed to change one or more characteristics of the mount in response to changes in the external, vibration inducing environment. Three possible designs will now be described in sufficient detail for a competent engineer to construct them.

**Figure 12** depicts a mount similar that shown in Figure 10, except that the piston, **1** is a sliding fit. The piston moves in response to a force impressed upon it by a linear motor, **2**. Engineers with a knowledge of electronic control systems will be capable of coupling this design of mount to vibration or road terrain sensors in order to create a "smart" vibration damping system.

A second possible "smart" mount design based on the current invention uses coaxial Piezo-electric fibres to form the permeable barrier, with the size of the gaps in the mesh being altered when the diameter of the fibres is altered by the application of a potential difference across the coaxial conductors built into the fibres.

The third "smart" design exploits the valve action of the permeable barrier, **1** shown in **Figure 9**. The position of this valve, and hence the degree of viscous damping, could be controlled by electromagnets. For example, by the addition of magnetically interacting, current carrying coils to the perimeter of the valve and the adjacent inner ledge, 3.
Leak-proof versions of the device were described earlier and illustrated in Figure 3. A lower cost, leak- proof version, for single impact applications will now be described. This version has two layers of packaging, an inner package that is stout enough to withstand moderate impacts and an outer cover that acts as a fluid capturing reservoir, if the inner layer leaks. The outer cover is designed so that under impact conditions it can increase in volume to store all of the fluid ejected from the inner package following leakage or a rupture. The outer cover can in principle be any large, loose, sealed bag encompassing the inner package. However for eye appeal or functional reasons this is unlikely to be acceptable for many applications. A number of more practical designs for the outer cover or bag will be described by way of example but they should not be considered as in any way limiting the scope of this feature of the invention.

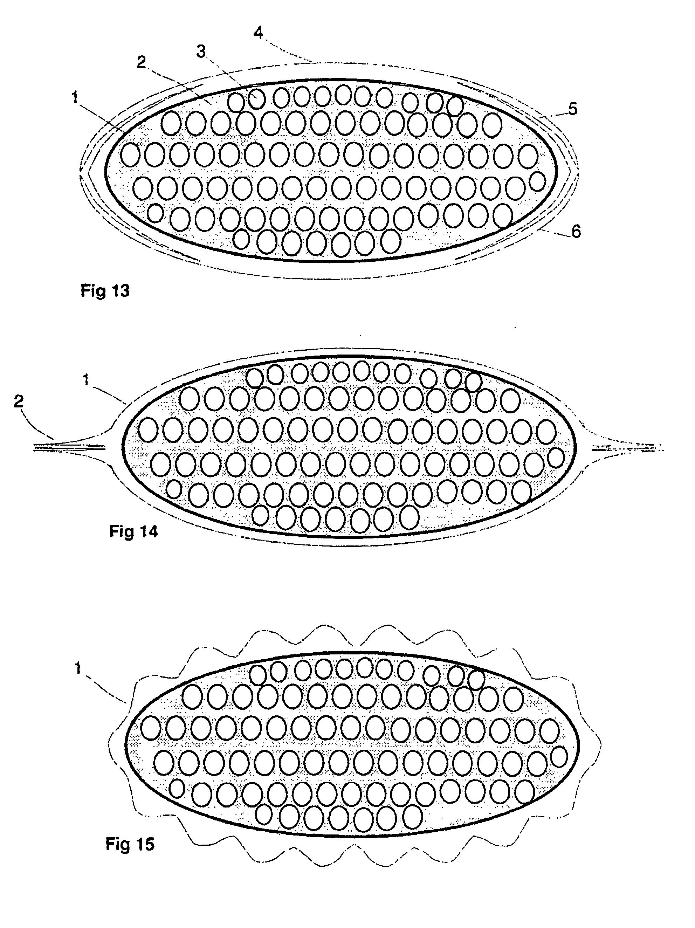

If the outer cover is a large bag, it can be tailored to fit neatly over the inner package by using folded gussets or pleats to take in the slack material. Figure 13 depicts an example of the device according to this version of the invention, with the inner package being an impact absorbing cushion taking the shape of a slightly flattened cylinder. Item **1** is the flexible inner package retaining a blend consisting of a viscous liquid, **2** and elastic walled gas filled capsules such as **3**. Item **4** is the outer cover which is tailored to fit neatly over item **1** but for clarity of illustration is shown slightly larger than item **1**.

The outer cover may be made from any flexible material which is capable of retaining the ejected fluid Suitable materials for the outer cover include non woven materials such as polythene sheeting or tightly woven fabrics such as Pertex ® or Ventile ®.
The woven materials may be sealed or proofed to prevent the slow seepage of fluid from the device following a rupture but tightly woven materials which are not sealed are adequate for eliminating the problem of widespread contamination by ejected fluid following a violent impact.
An advantage of selecting an unsealed micro-fibre material such as Pertex for the outer cover is that it can be used to wick away perspiration if the pad is designed for use in prolonged close contact with the human body.
**5** and **6** are examples of pleats in the outer cover which can unfold and expand to retain leaked fluid if the inner package bursts. The pleats can be lightly fixed in place by using tacking stitches, staples, weakly bonding adhesives, adhesive tape, spot welds, touch and close material or other means of lightly securing them.

The design of outer cover shown in **Figure 13** will not work efficiently if the impacting force is spread over the whole of the upper face of the device and traps the pleated material against the inner package.

**Figure 14** depicts an alternative design which overcomes the trapped pleats problem. In **Figure 14** the outer cover, 1 has external pleats such as **2**. If there is any danger of the pleated material being partially trapped by the external forces then the unfolding of the pleats may be assisted by lubricating the pleated material or separating the layers of the pleats using thin sheets of low friction material such as PTFE.

An alternative to the use of pleats is to construct the outer cover from a highly elastic material. In this version of the invention the outer cover can be a contact fit over the whole of the inner package when in normal use but can expand to accept the ejected fluid following a rupture of the inner package. Materials scientists will be aware of the elastomeric polymers suitable for this application. An alternative to a non woven elastomeric polymer based outer cover is to construct the outer cover from a highly elastic close woven material such as Lycra ®.

Whatever design or type of material is used for the outer cover, the volume of the outer cover should be able to increase sufficiently so that the cover can enclose any liquid ejected from the inner package, even when the inner package is completely flattened and all of the liquid is driven into the outer cover.

In addition to fulfilling its essential role of retaining any leaked fluid, the outer cover may also perform other duties. **Figure 15** depicts a device with the outer cover, **1** being constructed from an elastomeric polymer and having a corrugated cross section. If a device having this design was used for example as a back rest in a vehicle seat, the corrugations would provide air flow channels which would ventilate the cushion and keep the users back cool. A suitably selected material could be used for the outer cover which was sufficiently rigid that it provided a massaging effect when subjected to low compressive stresses but flexed under impact conditions, to allow the full potential of the underlying impact absorber to be utilised. The corrugated sections could be replaced by a plurality of local protrusions, in the outer cover, to produce a similar ventilating or massaging effect.

The elastic outer cover may become scuffed or punctured during its working life. Engineers will be aware of a number of methods of constructing self repairing outer covers including the use of healing polymers which re-bond together after being scratched or including a fluid in the space between the inner and outer bags which cures on exposure to air to seal the puncture hole, following an accidental puncturing of the outer cover. The outer cover may be designed to provide visual evidence that it has been damaged. For example, it may be constructed from a two layer laminate with the layers having contrasting colours which highlight any thinning due to abrasion. Alternatively, it may be preferable to construct the outer cover from a transparent material such as polythene to allow visual inspection of the inner package. In the latter case the inner package may be made from a two layer contrasting colour laminate to aid damage inspection.

Selected chemicals may be added to the space between the inner and outer walls to confer a number of benefits. The chemicals may be chosen, for example, to react with the fluid leaking from the inner package following a puncture of both layers of packaging, to solidify the fluid, to ease the cleaning up process after a major impact incident. Alternatively the chemicals may react with the fluid from the inner bag, to create a foam, inside the outer cover, which acts as a second defence cushion, to provide partial protection against further impacts. If the impact absorbing cushion is used for marine applications the chemicals may be chosen to react to generate a gas which inflates the outer cover to create a buoyancy aid. Other possibilities include, the generation of foams or gases, which are used to suppress combustion following an accident.

Electrodes may be placed between the inner and outer walls or attached to them, which complete a circuit if the inner wall is ruptured with internal leakage of fluid. The completed circuit may be used to initiate a number of actions including the triggering of remote alarms. If the cushion takes the form of a bumper on a vehicle the action initiated could be the inflation of passenger or pedestrian protection air bags. For airborne applications, the action initiated could be the deployment of parachutes.

A sheet of thermosetting plastic, foam, plywood or other material may be interposed between the inner and outer walls on one face of the device to give it a preferred shape.

One of the design features of impact absorbing pads made according to the earlier invention, revealed in patent application PCT/GB9603243 (Courtney), was that hydraulic fluid pressure transmitted the compressive stress equally in all directions. This meant that if the area of the impact zone was a fraction of the total front surface area of the pad, say for example 70%, then the volume of impact absorbing material under the remaining 30%, outside the impact zone, could still play an active role in absorbing the energy of the impact. This highly efficient use of the total impact absorber volume cannot be maintained indefinitely. If the pad is too large then its contents can flow to the sides of the impact zone, allowing the inner surfaces of the front and rear faces of the pad under the impact zone to make hard contact. That is, the pad will bottom out and lose its cushioning ability. A solution to the bottoming out problem has already been described above. This involves the incorporation of permeable barriers inside the package and is depicted in Figures 4 and 5.

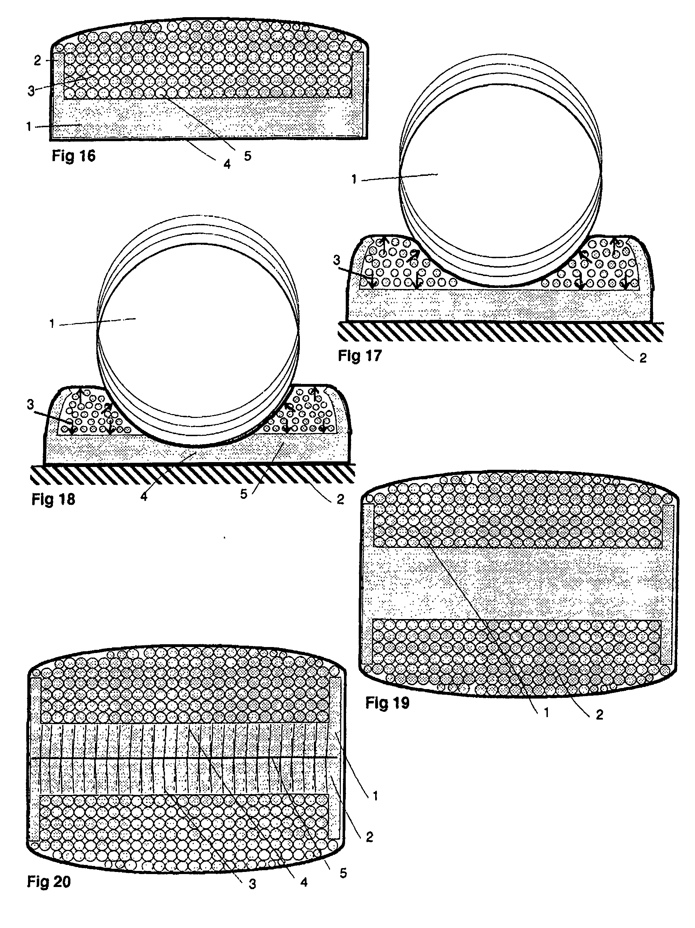

**Figure 16** depicts an alternative embodiment of the invention which overcomes the bottoming out problem and may be used with or without the internal permeable barriers. This embodiment also reduces the relative volume of incompressible fluid required for efficient operation of the device. In **Figure 16**, item **1** is a base layer or pallet with optional side walls, **2**. The base layer is typically constructed from closed cell, elastomeric foam, for example, expanded polystyrene or expanded polypropylene foam. Alternatively, the base layer may be constructed from a solid, elastomeric polymer or other elastic solid Item **3** is the upper layer, comprising a mixture of resilient capsules and an (effectively) incompressible liquid. The circles, for example **5**, depict the resilient capsules. The whole of the void space between the capsules is assumed to be occupied by the liquid. Item **4** is the outer packaging which totally encloses layers **1** and **2**. The package walls are constructed from flexible, high tensile stiffness material. The walls deform easily but do not stretch significantly during an impact. They can be made permeable using any of the methods described earlier. If necessary, the packaging material can be bonded to the external surfaces of the base layer, to prevent liquid leaking round the sides of the base, inside the walls. For ease of assembly, it may be desirable for the elastic fluid to be pre-packaged in one or more separate, flexible sachets. However, such sachets are not a substitute for external packaging that encloses all of the fluid and solid sheet layers. The dynamic equilibrium of forces during an impact, created by the reaction forces exerted on the external package walls by the fluid and solid layers is essential for the correct hydraulic functioning of this version of the invention.

**Figures 17** and **18** depict the composite version of the invention at successive stages of absorbing a violent impact. In **Figures 17** and **18**, item **1** is an impacting body, which could for example be a solid sphere which has been dropped, from a height, onto the horizontal impact absorber. In both diagrams the impact absorber rests on a very stiff, flat, solid surface, **2** which does not absorb a significant fraction of the impact energy.

At the early stage of the impact depicted in **Figure 17** the upper surface of the package wall has deformed but has not yet distorted sufficiently that it makes contact with the upper surface of the lower, solid layer. The resilient capsules decrease in volume during the impact but the volume of the liquid remains effectively constant. Consequently, the fractional volume of the capsules decreases compared with the liquid volume, the capsules move out of close contact and are free to rearrange themselves to accommodate the change in the shape of the package. The liquid exerts hydraulic pressure which acts at right angles to any adjacent solid surfaces. The arrows, e.g., **3** in **Figures 17** and **18** indicate the directions of the resultant liquid pressure at some of the solid surfaces. The hydraulic pressure is exerted on all of the surfaces of the pallet which are in contact with the liquid. As a result, pallet material to the sides of the impact zone can participate in absorbing impact energy.

**Figure 18** depicts a later stage of the impact, when the pallet material is crushed directly. The pallet material, **4** under the impact zone now acts as a conventional solid or foam impact absorbing material but because of the hydraulic pressure equalisation phenomenon the resilient capsules and pallet material such as 5, to the sides of the impact zone, continue to experience an increasing compressive stress and continue to absorb impact energy.

The shapes of the cross sections of the layers depicted in **Figure 16** are not to be understood as limiting the invention. Depending on specific design requirements, the thickness or surface shape of the layers may vary across the profile and the local density of the solid material may vary. The interior surfaces of the solid base, in contact with the liquid may take up any range of shapes preferred by the designer, in order to increase the surface area of the solid material in contact with the liquid. The invention may consist of a plurality of alternating layers of fluid and solid materials. A plurality of adjacent solid compartments such as item **1** with side walls, **2** in **Figure 16** may be housed within a single outer package. The solid layers may be cut into segments and bonded to a flexible base, in order to allow articulation of the impact absorber, while maintaining high compressive stiffness. Some of these variations will now be described in greater detail.

An important feature of the impact absorber depicted in **Figures 16**, **17** and **18** is that the redistribution of the resilient capsules during the compression process helps to distribute the reactive stresses on the impacting body, **1** more uniformly than if the same body had collided with a solid impact absorber having the same stiffness as the mean stiffness of the resilient capsules and the pallet material.

The same reactive stress redistribution benefits can be offered to the underlying surface, using a variation of the invention as depicted in **Figure 19**. In **Figure 19**, in additional to the upper layer, **1** a lower layer **2**, also consisting of resilient capsules and (effectively) incompressible liquid has been added. The composition of layers **1** and **2** may differ. For example, if the impact absorber is being used as part of the shell material of a prefabricated hospital, for use in low temperature war zones, the liquid in the outer layer could be an organic liquid with a low freezing point and the liquid for the inner layer could be water based, in order to provide a high latent heat of vaporisation, to absorb thermal energy, in the event of a fire or explosion inside the building. On a smaller scale, the liquid fractions could have different thermal conductivity's, so that if the pad took the form of a seat cushion or mattress the user could select a warm or cool side for lying or sitting on.

The version of the invention depicted in **Figure 20** is a variation on that depicted in **Figure 19**, which allows articulation of the impact absorber, even if the solid layers are rigid under normal working, non-impact conditions. In **Figure 20**, the solid material is separated into two stacked layers, **1** and **2**. A plurality of wedge shaped grooves such as **3** and **4** are cut into each layer, to separate them into segments. The dissected solid blocks are then bonded to a strong, thin flexible sheet **5**, to prevent them drifting around inside the package.

The novel improvements described in this patent application are capable of being applied to a wide range of designs of impact and vibration absorbers including those described by the present inventor in patent application PCT/GB9603243 (Courtney). The scope of the present invention is extended to include at least:
i) Devices based on packages, which include fluids, which have been made more compressible by including a plurality of resilient solid or flexible walled, gas filled capsules.
ii) Devices as above, in which the capsules are hollow resilient spheres.
iii) Devices as above in which some at least of the gas capsules, have at least one open end, with the gas trapped inside being retained at the boundary with the surrounding liquid by capillary action.
iv) Devices as above with the package being shaped such that it decreases in volume when being subjected to an impact.
v) Devices as above, which are partitioned, with clips or other items, which allow the relative sizes of the partitioned parts to be adjusted by the end user.
vi) Devices as above, which use flexible cross ties or spot welds to link together opposite faces of the package, to minimise the degree of local bulging, when impact forces act on a fractional part of the front face of the device.
vii) Devices as above, in which some of the gas filled capsules are bonded to the inner walls of the package.
viii) Devices as above, in which, some of the gas filled capsules, are linked together on internal sheets, on open mesh grids of flexible material or on long stands of fibre.
ix) Devices as above, in which, some at least, of the gas filled capsules can have their internal pressure controlled by means of connections to external valves and compressed gas supplies, such as gas compression pumps.
x) Devices as above, but having a nested structure, with larger elastomeric capsules including one or more elastomeric capsules and optionally, incompressible fluid
xi) Devices as above, which are used as impact absorbing pads added to personal protective bodywear or body armour.
xii) Devices as (i) to (x) above, which are used as impact absorbing pads added to vehicles, to protect the occupants or objects travelling within the vehicle or persons, animals or objects outside the vehicle, during a collision.
xiii) Devices as (i) to (x) above, which are used as protective packaging.
xiv) Devices as (i) to (x) above, which are used as saddles or protective pads for animals.
xv) Devices as (i) to (x) above, which are used as road humps, sleeping policemen or other vehicle retarding means.
xvi) Devices as (i) to (x) above, in which the liquid fraction is a liquid being stored or transported with the inner package acting as the storage container.
xvii) Devices in which the fluid is an electrorheological or magnetorheological fluid, with the device being connected to suitable circuits, to activate the electrorheological or magnetorheological phenomenon in response to changing external conditions.

## Claims

1. An impact or vibration absorbing device, consisting of a deformable container or flexible package, filled with a mixture of a liquid, grease or jelly fluid and two or more resilient capsules, free to move relative to each other, with the device including one or more permeable barriers, with the holes in the barriers being too small to allow the passage of the capsules, **characterised by** the provision of viscous damping when some of the fluid is forced through small holes in the barrier(s) during violent impacts.

2. An impact or vibration absorbing device according to claim 1 with at least one permeable barrier being part of the external packaging or container walls.

3. An impact or vibration absorbing device according to claim 2, with the permeable barrier being covered by an impermeable elastic membrane, which is bonded to the outer surface of the permeable barrier at regular, close intervals, so that fluid which is driven through the permeable barrier during the impost is trapped locally in bubbles formed from the stretched elastic membrane, with the compressive stress generated by the stretching of the elastic membrane driving the fluid back through the permeable barrier after the impact.

4. An impact or vibration absorbing device according to any of the above claims, with at least one permeable barrier being a partition inside the deformable container or package, which creates a plurality of sub-chambers, each enclosing fluid, with the permeable barriers being approximately perpendicular to the impact absorbing face of the device.

5. An impact or vibration absorbing device according to claim 4, with the permeable barriers being sufficiently close to each other that when absorbing impacts, some of the elastomeric capsules are always trapped under the impact zone.

6. An impact or vibration absorbing device according to any of the above claims, with the interior of the device being partitioned into two sub-chambers separated by a permeable barrier and sequentially aligned along the line of action of the impact force, with the containment for the first sub-chamber having flexible sides, allowing its volume to reduce under impact and the second sub-chamber being retained by a rigid walled external containment so that its volume remains constant, but with fluid being able to flow through the permeable barrier during an impact, as the volume of resilient material in the second sub-chamber decreases and with the added fluid being pumped back into the first sub-chamber, as the resilient capsules expand after the deforming force has diminished from its maximum value.

7. An impact or vibration absorbing device according to any of the above claims enclosed by a outer flexible walled cover with the outer cover being capable of capturing and storing the fluid from within the first inner package if the inner package ruptures and loses all or at least a substantial fraction of its enclosed fluid.

8. An impact or vibration absorbing device according to any of the above claims with the inner and/or outer walls being constructed from laminated material having two contrasting colours, with the innermost material of the laminate exposing itself for visual inspection if the outer layer of the laminate becomes damaged.

9. An impact or vibration absorbing device according to any of the above claims, with the package enclosing a plurality of alternating elastomeric foam or solid sheet layers and mixed resilient capsule and fluid layers.

10. An impact or vibration absorbing device according to claim 9 with the sheet layers having side walls of elastomeric material, such that the hydraulic pressure exerted by the fluid during an impost causes the walls to be compressed, absorbing a fraction of the impact energy.

## Patentansprüche

1. Ein aufprall- oder vibrationsabsorbierendes Gerät, bestehend aus einem verformbaren Container oder flexibler Verpackung, gefüllt mit einer Mixtur aus Flüssigkeit, Schmierfett oder gallertartiger Flüssigkeit und zwei oder mehr federnden Kapseln, frei beweglich relativ zu einander, mit dem Gerät bestehend aus einer oder mehreren permeablen Hindernissen, mit den Löchern in den Hindernissen zu klein um die Kapseln durchzulassen, charakterisiert durch die Bereitstellung von Viskosedämpfung, wenn etwas von der Flüssigkeit durch kleine Löcher in dem Hindernis (sen) gedrückt wird während eines starken Aufpralls.

2. Ein aufprall- oder vibrationsabsorbierendes Gerät nach Anspruch 1, **gekennzeichnet durch** mindestens ein permeables Hindernis als Teil der äußeres Verpackung oder Containerwände.

3. Ein aufprall- oder vibrationsabsorbierendes Gerät nach Anspruch 2, **gekennzeichnet durch** das permeable Hindernis bedeckt mit einer undurchlässigen, elastischen Membrane, in regulären, kurzen Intervallen an der äußeren Oberfläche des permeablen Hindernisses befestigt, so daß Flüssigkeit, welche **durch** das permeable Hindernis während des Aufpralles gedrückt wird lokal eingeschlossen ist, in Blasen geformt aus der ausgedehnten elastischen Membrane, mit der komprimierten Belastung generiert **durch** das ausdehnen der elastischen Membrane, treibt die Flüssigkeit nach dem Aufprall zurück **durch** das permeable Hindernis.

4. Ein aufprall- oder vibrationsabsorbierendes Gerät nach den oben genannten Ansprüchen, **gekennzeichnet durch** mindestens ein permeables Hindernis als Teilung innerhalb des deformierbaren Containers oder Verpackung, welche eine Vielzahl von Unterkammern kreiert, jede beinhaltet Flüssigkeit, mit den permeablen Hindemissen ungefähr senkrecht zu der aufprallabsorbierenden Fläche des Gerätes.

5. Ein aufprall- oder vibratiansabsorbierendes Gerät nach Anspruch 4, **dadurch gekennzeichnet, daß** die permeablen Hindernisse hinreichend eng zu einander sind, so daß bei absorbierenden Aufpralle, einige der elastomerischen Kapseln immer unter der Aufprallzone eingeschlossen sind.

6. Ein aufprall- oder vibrationsabsorbierendes Gerät nach den oben genannten Ansprüchen, **dadurch gekennzeichnet, daß** das Innere des Gerätes in zwei Unterkammern unterteilt ist, getrennt durch ein permeables Hindernis und der Reihe nach angeordnet entlang der Wirkungslinie der Aufprallenergie, mit dem Behältnis der ersten Unterkammer mit flexiblen Seiten, seinem Volumen erlaubend sich bei einem Aufprall zu reduzieren und der zweiten Unterkammer, gehalten von einem steifwändigen äußeren Behältnis, so daß sein Volumen konstant bleibt, aber die Flüssigkeit die Möglichkeit hat während eines Aufpralles durch die permeable Barriere zu fließen, wenn sich das Volumen aus dem federnden Material in der zweiten Unterkammer verkleinert und mit der zusätzlichen Flüssigkeit zurück in die erste Unterkammer gepumpt wird, wenn die federnden Kapseln sich ausdehnen, nachdem sich die deformierenden Kräfte von ihrem maximalen Wert verringert haben.

7. Ein aufprall- oder vibrationsabsorbierendes Gerät nach den oben genannten Ansprüchen umschlossen von einer äußeren flexibel-wändigen Hülle **dadurch gekennzeichnet, daß** die äußeren Hülle fähig ist die Flüssigkeit von dem ersten inneren Pack aufzunehmen und zu speichern, wenn das innere Pack reist und den gesamten oder wenigstens einen erheblichen Teil seiner beinhalteten Flüssigkeit verliert.

8. Ein aufprall- oder vibrationsabsorbierendes Gerät nach den oben genannten Ansprüchen **gekennzeichnet durch**, die inneren und/oder äußeren Wände bestehend aus beschichtetem Material mit zwei kontrastierenden Farben, mit dem innersten Material der Beschichtung sichtbar bei optischer Inspektion, wenn die äußere Schicht der Beschichtung beschädigt wird.

9. Ein aufprall- oder vibrationsabsorbierendes Gerät nach den oben genannten Ansprüchen **dadurch gekennzeichnet, daß** die Verpackung eine Vielzahl von abwechselnden elastomerischem Schaum oder festen Schichten, und gemischten federnden Kapsel und Flüssigkeitsschichten umschließt.

10. Ein aufprall- oder vibrationsabsorbierendes Gerät nach Anspruch 9 **dadurch gekennzeichnet, daß** die Schichten Seitenwände aus elastomerischem Material haben, so daß der hydraulische Druck, ausgeübt durch die Flüssigkeit während eines Einschlages, dazu führt das die Wände komprimiert werden und so einen Teil der Aufprallenergie absorbieren.

## Revendications

1. Un amortisseur de charges de choc ou de vibrations, constitué d'un conteneur déformable ou empaquetage flexible, rempli d'un mélange de liquide, de graisse ou de jelée et de deux capsules élastiques ou davantage, qui peuvent se déplacer librement les unes par rapport aux autres, l'amortisseur comprenant une ou plusieurs barrières perméables, les ouvertures dans les barrières étant trop petites pour laisser passer les capsules, **caractérisé par le fait qu'**il y a amortissement visqueux lorsqu'une partie du fluide est forcée à travers de petites ouvertures dans la ou les barrières pendant les chocs violents.

2. Un amortisseur de charges de choc ou de vibrations, selon la revendication 1, dont au moins l'une des barrières perméables fait partie des parois extérieures de l'empaquetage ou du conteneur.

3. Un amortisseur de charges de choc ou de vibrations, selon la revendication 2, dont la barrière perméable est recouverte d'une membrane élastique imperméable, qui est collée à la surface extérieure de la barrière perméable à des intervalles réguliers et rapprochés, de sorte que le fluide qui est forcé à travers la barrière perméable pendant le choc est retenu localement à l'intérieur de bulles formées à partir de la membrane élastique étirée, la contrainte de compression produite par l'étirement de la membrane élastique refoulant le fluide à travers la barrière perméable après le choc.

4. Un amortisseur de charges de choc ou de vibrations, selon l'une quelconque des revendications précédentes, dont au moins l'une des barrières perméables est constituée d'une cloison à l'intérieur du conteneur déformable ou de l'empaquetage, qui crée plusieurs sous-chambres, chacune d'elles contenant du fluide, les barrières perméables étant approximativement perpendiculaires à la surface qui amortit les charges de choc de l'amortisseur.

5. Un amortisseur de charges de choc ou de vibrations, selon la revendication 4, les barrières perméables étant suffisamment rapprochées les unes des autres de sorte que, lors de l'amortissement des charges de choc, certaines des capsules en élastomère sont toujours retenues sous la zone d'impact.

6. Un amortisseur de charges de choc ou de vibrations, selon l'une quelconque des revendications précédentes, l'intérieur de l'amortisseur étant subdivisé en deux sous-chambres séparées par une barrière perméable et alignées de manière séquentielle le long de la ligne d'action de la force d'impact, le conteneur de la première sous-chambre ayant des parois flexibles, qui lui permettent de subir une réduction de volume sous l'effet de la charge de choc, et le conteneur de la deuxième sous-chambre ayant des parois rigides de sorte que son volume reste constant, mais le fluide pouvant s'écouler à travers la barrière perméable pendant un choc, à mesure que le volume de la matière élastique dans la deuxième sous-chambre diminue, et le fluide transféré étant refoulé dans la première sous-chambre, à mesure que les capsules élastiques augmentent de volume après que la force de déformation ait baissé à partir de sa valeur maximum.

7. Un amortisseur de charges de choc ou de vibrations, selon l'une quelconque des revendications précédentes, entouré d'une gaine extérieurs à parois flexibles, cette gaine extérieure étant capable de recevoir et de retenir le fluide venant du premier empaquetage intérieur si celui-ci subit une rupture et perd la totalité ou, tout du moins, une grosse proportion du fluide qu'il renferme.

8. Un amortisseur de charges de choc ou de vibrations, selon l'une quelconque des revendications précédentes, la paroi intérieure et/ou extérieure étant fabriquée en matière laminée de deux couleurs contrastées, la matière intérieure du stratifié se mettant à découvert, et devenant donc visible, si la couche extérieure du stratifié est endommagée.

9. Un amortisseur de charges de choc ou de vibrations, selon l'une quelconque des revendications précédentes, l'empaquetage renfermant une multiplicité de couches constituées chacune de mousse d'élastomère ou d'une feuille solide, alternant avec des couches constituées de capsules élastiques et de fluide.

10. Un amortisseur de charges de choc ou de vibrations, selon la revendication 9, les couches de feuilles ayant des parois latérales en élastomère, de sorte que la pression hydraulique exercée par le fluide pendant un choc entraîne la compression des parois, absorbant ainsi une fraction de l'énergie d'impact
